# EUROPEAN PATENT SPECIFICATION

(11) **EP 2 645 628 B1**
(45) Date of publication and mention of the grant of the patent: **17.06.2015**
(21) Application number: 12305362.1
(22) Date of filing: 29.03.2012
(51) Int. Cl.: H04L 12/24, H04L 12/26

(54) **Continuous detection of dead or impaired IPTV streams**
Kontinuierliche Detektion toter oder beschädigter IPTV-Streams
Détection en continu de flux IPTV morts ou altérés

(43) Date of publication of application: 02.10.2013
(73) Proprietor: ALCATEL LUCENT, 92100 Boulogne-Billancourt (FR)
(72) Inventor: Surya, Gopal, 560037 Bangalore (IN); Natarajan, Sreekanth, 600020 Chennai (IN); Jagannathan, Aravindan, 600033 CHENNAI (IN)
(74) Representative: Sayettat, Julien Christian

(56) References cited:
- US-A1- 2007 058 043
- US-A1- 2008 163 333

## Description

### TECHNICAL FIELD

The embodiments herein relate to Internet Protocol Television (IPTV) networks and, more particularly, to continuous monitoring of health of streams in Internet Protocol Television (IPTV) networks.

### BACKGROUND

Internet Protocol television (IPTV) is a system through which television services are delivered using the internet protocol suite over a packet switched network such as the internet, instead of being delivered through traditional terrestrial, satellite signal, and cable television formats. IPTV is distinguished from internet television by its ongoing standardization process and preferential deployment scenarios in subscriber based telecommunications networks with high speed access channels into end user premises via set top boxes or other customer-premises equipment. It is estimated that the number of global IPTV subscribers are expected to grow from 28 million in 2009 to 83 million in 2013.

In spite of the expected increase in subscribers, the programming and streaming options are largely still in the control of conventional technical programmers and defined and controlled by them based on what they believe viewers want and need. IPTV is sensitive to packet loss and delays if the streamed data is unreliable. Further, IPTV has strict minimum speed requirements in order to facilitate the right number of frames per second to deliver moving pictures. This means that the limited connection speed and bandwidth available for a large IPTV customer base can reduce the service quality. Streaming IPTV across wireless links within the home has proved troublesome. Further, an IPTV stream is sensitive to packets arriving at the right time and in right order.

With the number of channels increasing day by day, it is becoming increasingly difficult for the network operator to continuously monitor dead or impaired IPTV streams. Currently existing methods like metering of a few multicast addresses using filters in the hardware is not a scalable solution as filters are usually limited. This approach also needs a lot of software intervention. Trouble shooting on the impaired/dead channel stream is done only when the user raises a complaint. There are no means for the network operator to monitor in real time and predict future issues.

US2007058043A1 (THUKRAL VIVEK [US]) discloses a method for monitoring the health of an IPTV network. Ping packets are used to monitor the packet drop rate and create an alert if too many packets have been dropped.

US2008163333A1 (KASRALIKAR RAHUL) discloses a method for monitoring network traffic by collection of packet count statistics such as cummulative packet count or the change of two packet counts. It does not disclose IPTV or multiple scanning intervals.

### SUMMARY

Embodiments herein disclose a method for monitoring health of an Internet Protocol Television (IPTV) Network in a continuous manner, the method comprising of metering each packet destined for an IPTV stream using a counter; scanning the counter at a first predefined interval; incrementing an impairment counter if the counter does not satisfy expected rate for the IPTV stream; and scanning the impairment counter for health of the IPTV stream at a second predefined interval. The method of metering each packet further comprises of creating a counter after passing necessary checks, on the IPTV stream joining; configuring the counter with an expected number of bits in the first predefined interval; and deducting number of packets from the counter, on detecting the number of packets destined for the IPTV stream. The IPTV stream is not in good health if count of the impairment counter is greater than a predefined threshold and an alert is raised on detecting that the IPTV stream is not in good health.

Also, disclosed herein is an Internet Protocol Television (IPTV) Network, wherein health of the IPTV network is monitored in a continuous manner, the IPTV network comprising at least one means configured for metering each packet destined for an IPTV stream; scanning the counter at a first predefined interval; incrementing an impairment counter if the counter does not satisfy expected rate for the IPTV stream; and scanning the impairment counter for health of the IPTV stream at a second predefined interval. The IPTV network is further configured for metering each packet by creating a counter, on the IPTV stream joining; configuring the counter with an expected number of bits in the first predefined interval; and deducting number of packets from the counter, on detecting the number of packets destined for the IPTV stream. The IPTV network is further configured for creating the counter after passing necessary checks. The IPTV network is further configured for raising an alert on detecting that the IPTV stream is not in good health.

Also, disclosed herein is a device in an Internet Protocol Television (IPTV) Network, wherein health of the IPTV network is monitored in a continuous manner, the device comprising at least one means configured for metering each packet destined for an IPTV stream; scanning the counter at a first predefined interval; incrementing an impairment counter if the counter does not satisfy expected rate for the IPTV stream; and scanning the impairment counter for health of the IPTV stream at a second predefined interval. The device is further configured for metering each packet by creating a counter, on the IPTV stream joining; configuring the counter with an expected number of bits in the first predefined interval; and deducting number of packets from the counter, on detecting the number of packets destined for the IPTV stream. The device is further configured for creating the counter after passing necessary checks. The device is further configured for raising an alert on detecting that the IPTV stream is not in good health.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:
FIG. 1 illustrates a network diagram of an IPTV system, as disclosed in the embodiments herein;
FIG. 2 is a block diagram which depicts the operational parameters involved in detection of dead and impaired IPTV streams, as disclosed in the embodiments herein;
FIG. 3 is a flow diagram which describes the various steps involved in detection of dead and impaired streams, as disclosed in the embodiments herein;
FIG.4 is a flow diagram which describes the operation flow involved in monitoring of health of IPTV streams, as disclosed in the embodiments herein; and
FIG.5 is an exemplary block diagram which depicts the continuous streaming operation in IPTV, as disclosed in the embodiments herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

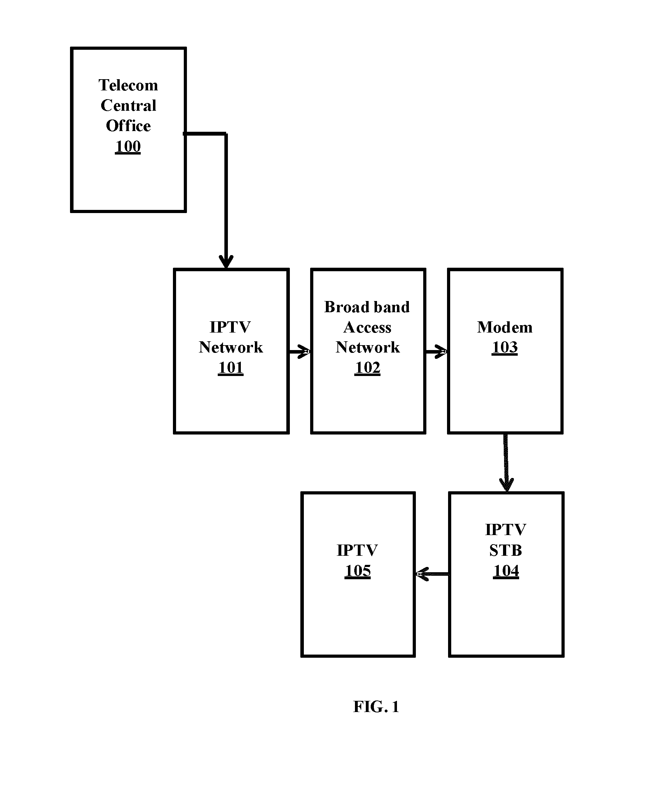

The embodiments herein disclose a method and system for continuous detection of health of IPTV streams in an IPTV network. Referring now to the drawings, and more particularly to FIGS. 1 through 4, where similar reference characters denote corresponding features consistently throughout the figures, there are shown embodiments.

FIG. 1 illustrates a network diagram of an IPTV system, as disclosed in the embodiments herein. The system comprises of a Telecom central office 100, IPTV network 101, Broadband Access Network 102, Modem 103, IPTV STB 104 and IPTV 105.The Telecom central office 100 is further connected to a plurality of media sources such as satellite channels, live feeds (news, sports), stored media and the like. Further, the IPTV network 101 can be any network operator who is transmitting channel feeds to the subscriber. The IPTV network 101 may choose a certain set of channels to be transmitted to certain sets of subscribers depending upon the customer's subscription. For example, a subscriber who has paid the charges for sports channels may receive feeds of the sports channels he/she has paid for. Customers may view IPTV programming on analog televisions, multimedia computers, IP televisions (data only televisions), handheld devices (tablets, mobile phones, PDAs) and any other suitable device. For residential users, IPTV is often provided in conjunction with Video on Demand and may be bundled with Internet services such as Web access and VoIP.

The broadband access network 102 provides high data rate access to the internet. The broadband access network 102 may support quality of service (QOS), multicast, separation of end user traffic and differentiate between services. Further the broadband access network 102 must have a telecommunications management solution that supports network operation and maintenance. The modem 103 regulates the information sent by the IPTV network 101. The modem 103 also performs error correction wherein it checks if the information received is undamaged. Further, the modem 103 compresses the data received from IPTV network 101. The IPTV STB (IPTV set top box) 104 decodes the IP video and converts it into standard television signals. The IPTV STB 104 is the gateway to an IP video switching system. The Switched Video Service (SVS) system allows viewers to access broadcast network channels, subscription services, and movies on demand. The customer can access different media by using the television remote to send control commands to the SVS. The unit processes the request and displays the requested media type.

The IPTV STB 104 extracts IP packets to obtain the transport stream. A channel decoder detects and corrects errors and provides the transport stream to descrambler assembly. Further, the descrambler assembly receives key information from either a smart card or from an external conditional access system (e.g. via a return channel). Using the key(s), the IPTV STB 104 can decode the transport stream and the program selector can extract the specific program stream that the customer has selected. The IPTV STB 104 then de multiplexes the transport stream to obtain the program information. The program table allows the IPTV STB 104 to know which streams are for video, audio and other media for that program. The program stream is then divided into its elementary streams (voice, audio and control) which is supplied to a compositor that create the video signal that the television can display.

Further, an IP video system digitizes and reformats the original video, codes and/or compresses the data, adds IP address information to each packet , transfers the packet through a packet data network , recombines the packets and extracts the digitized video, decodes the data and converts the digital video back into its original video form. The video form can be viewed by the customer in the IPTV 105 format through a device which could in the form of a smart phone, PDA, PC, TV and so on.

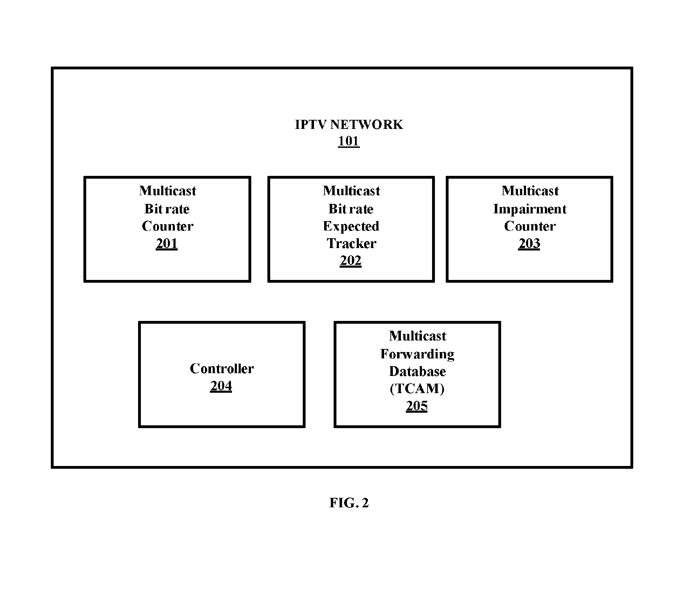

FIG. 2 is a block diagram which depicts the operational parameters involved in detection of dead and impaired IPTV streams, as disclosed in the embodiments herein. The IPTV network 101 comprises a multicast forwarding database 205, a multi cast bit rate counter 201, a multi cast bit rate expected tracker 202, a multicast impairment counter 203 and a controller 204. The multicast forwarding database 205 holds the port membership information for all active multicast address entries. The key for an entry consists of a VLAN ID and MAC address pair. The entries may contain data for more than one protocol. Further, the multicast forwarding database 205 is run by TCAM. TCAM is a special type of computer memory used in certain very high speed searching applications.

The IPTV network 101 configures the expected bit rate which may be received from the operator for each multicast stream and based on that the software calculates the expected bytes in a fixed interval of time. When a matching entry is hit, the multicast bit rate counter 201 is decremented by the amount of bits received. The multicast streaming creates a delay which may lead to packet loss in the transmission of signals, thus resulting in continuity errors and improper streaming. To monitor this problem, a multicast impairment counter 203 is implemented. The software scans through the multicast impairment counter 203 at periodic intervals to check the number of streams not received properly based upon the time intervals.

The controller 204 performs certain functions such as decrementing and incrementing bit rates and counters. Further, the controller 204 also works as a comparator and a timer. The controller 204 which also functions as a comparator essentially scans through all the entries in the multicast bit rate counter 201 and increments the impairment counter values by 1 if any counter value > 0. Further, the controller 204 works as a timer in co-ordination with the software which calculates the expected bits received in a fixed time interval (say 5 seconds).

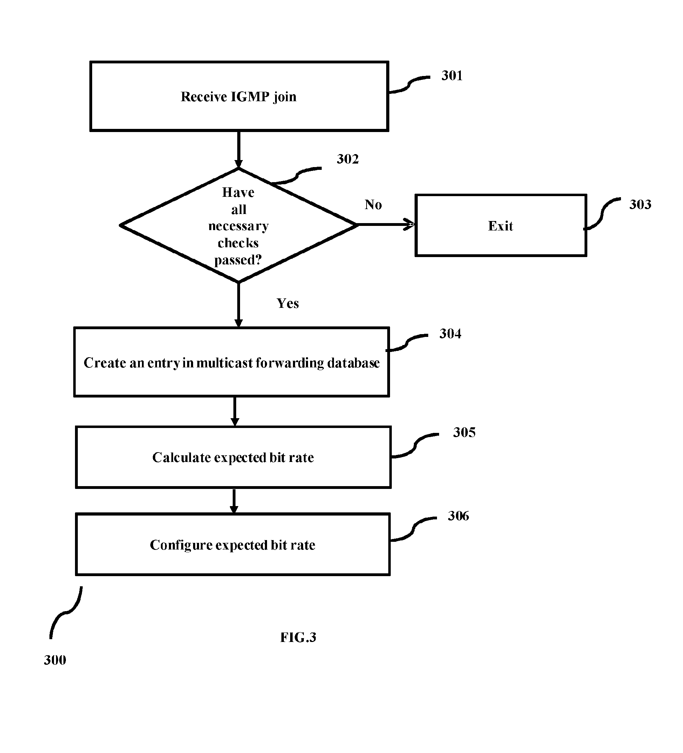

FIG. 3 is a flow diagram which describes the various steps involved in detection of health of IPTV streams, as disclosed in the embodiments herein. Initially, the multicast stream receives (301) a joining request, which may be in the form of an IGMP (Internet Group Membership Protocol) JOIN. Further, the software checks (302) if all necessary parameters have been passed and the software creates (304) an entry in the multicast forwarding database 205. The IPTV network 101 calculates (305) the expected bit rate for each multicast stream. Based on the calculation, the software configures (306) the expected byte rate in a fixed interval of time. The various actions in method 300 may be performed in the order presented, in a different order or simultaneously. Further, in some embodiments, some actions listed in FIG. 3 may be omitted.

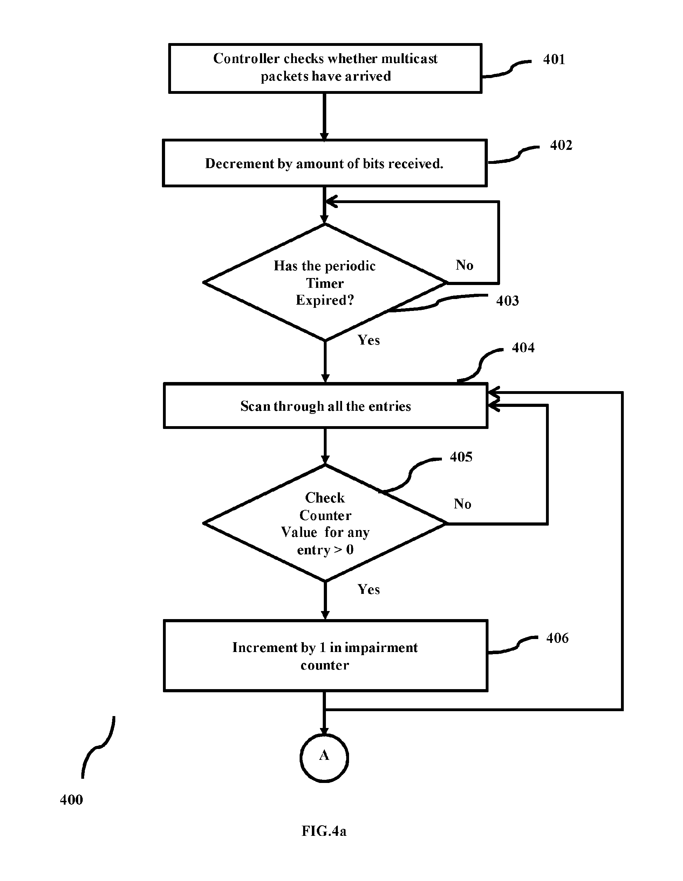

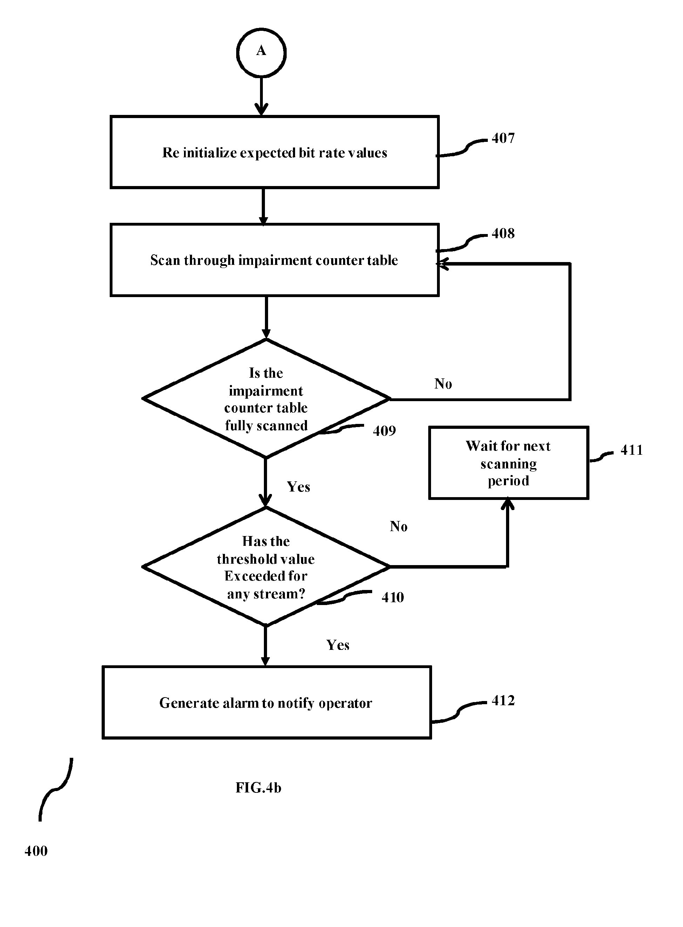

FIG.4a and 4b are flow diagrams which describes the operation flow involved in monitoring of health of IPTV streams, as disclosed in the embodiments herein.Initially when a multicast packet arrives (401) in the packet processor, it looks up the destination address in the multicast forwarding database 200. When a matching entry is hit, the multicast bit rate counter 201 decrements (402) the amount of bits received. Further, if the periodic timer expires (403), the hardware scans (404) through all the entries in the multicast bit rate counter 201. The periodic timer checks (405) if any counter value for any entry is > 0. The multicast impairment counter 204 increments (406) by 1 for one stream if counter value is > 0 for any entry. Once the multicast impairment counter 204 increments (406) by 1 for one stream it continues to scan through all the entries in the table until it is completely scanned.

Further, the bit rate counter re initializes (407) the expected bit rate values. The software scans (408) through the multicast impairment counter table to check if streams were received properly in corresponding time intervals. Further a check is performed to find out if the entire impairment counter table has been completely scanned (409).If the impairment counter table is not completely scanned, the scanning (408) of the entries in the impairment counter table continues. Another check is performed to see whether the threshold (of receiving channel streams) has been exceeded (410), if the threshold has been exceeded for any stream an alarm is generated (412) to notify the operator. If the threshold has not been exceeded for any stream, then the software waits for next scanning (411) period through the multicast impairment counter table 204. The alarm generated (412) to notify the operator when the threshold has been exceeded for any stream contains information about all impaired streams. Thus the operator investigates and rectifies only the impaired streams. The various actions in method 400 may be performed in the order presented, in a different order or simultaneously. Further, in some embodiments, some actions listed in FIG. 4 may be omitted.

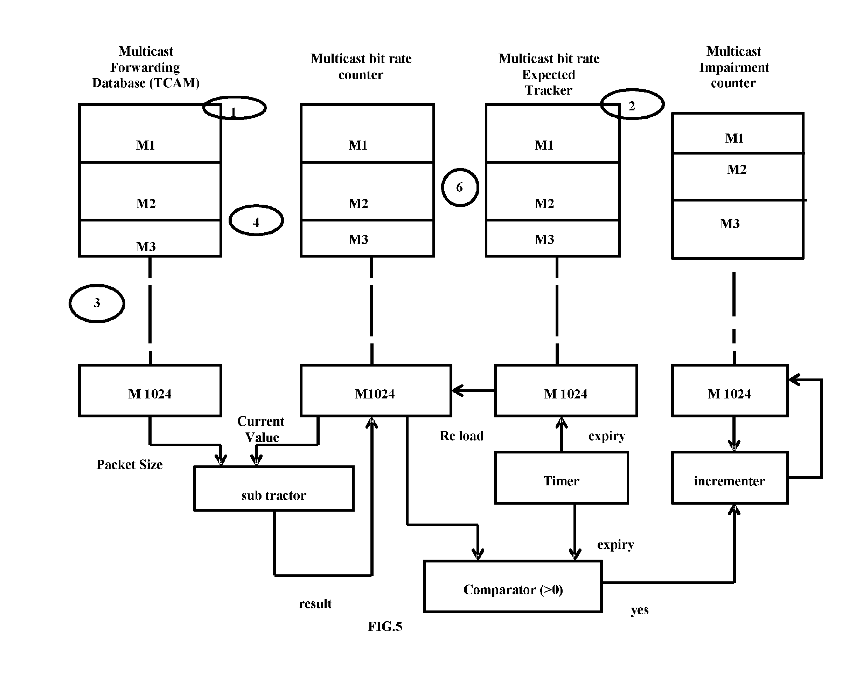

FIG. 5 is an exemplary block diagram which depicts the continuous streaming operation in IPTV, as disclosed in the embodiments herein. In the IPTV network 101, traditional broadcast television channels are delivered via IP multicasting. IGMP (Internet Group Membership Protocol) is the control mechanism used to control the delivery of multicast traffic to authorized users. IGMP commands tell the upstream equipment to stop sending ("leave") one channel or begin sending ("join") another channel. Depending on the architectural choices, this process occurs in the DSLAM (Digital Subscriber line access multiplexer), an aggregation switch or at an edge router.

Further, IGMP provides three basic functions for IPTV network 101. They are:
1. JOIN: An IGMP host indicates that it wants to receive information from ("become a member of') a multicast group.
2. LEAVE: An IGMP host indicates that it no longer wants to receive information from a multicast group.
3. QUERY: An IGMP router can ask the hosts which group they are members of. This is done to verify a JOIN/LEAVE request or to look for error conditions. For example, a set top box may have been unplugged so did not issue a leave command.

Whenever an IGMP JOIN is received for a multicast stream, the software creates an entry in the multicast forwarding database 205 after doing all the necessary checks. Further, the IPTV network 101 configures the expected bit rate for each multicast stream. Based on that software calculates the expected bytes in a fixed time interval. Once a multicast packet arrives in the packet processor, it looks up the destination address in the multicast forwarding database 205. When a matching entry is hit, the corresponding multicast bit rate counter 201 is decremented by the amount of bits received. When a periodic timer expires, the hardware scans through all the entries in the multicast bit rate counter 201.

Further, if any counter value is > 0, the multicast impairment counter 203 is incremented by 1. The bit rate counters are then re initialized with the expected bit rate values. Finally, the software scans through the multicast impairment counter 203 to check how many streams were not received properly in corresponding time intervals.

The embodiments disclosed herein can be implemented through at least one software program running on at least one hardware device and performing network management functions to control the network elements. The network elements shown in Fig. 2 include blocks which can be at least one of a hardware device, or a combination of hardware device and software module.

The embodiment disclosed herein specifies a system for continuous detection of health of IPTV streams. The mechanism allows a hardware block to continuously monitor all IPTV streams for quality without software intervention providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written in e.g. Very high speed integrated circuit Hardware Description Language (VHDL) another programming language, or implemented by one or more VHDL or several software modules being executed on at least one hardware device. The hardware device can be any kind of device which can be programmed including e.g. any kind of computer like a server or a personal computer, or the like, or any combination thereof, e.g. one processor and two FPGAs. The device may also include means which could be e.g. hardware means like e.g. an ASIC, or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation.

## Claims

1. A method for monitoring health of an Internet Protocol Television, IPTV, Network in a continuous manner, said method comprising of Metering (401, 402)
each packet destined for an IPTV stream using a counter;
Scanning (403, 404) said counter at a first predefined interval; Incrementing (405, 406)
an impairment counter if said counter does not satisfy expected rate for said IPTV stream; and
Scanning (408)
said impairment counter for health of said IPTV stream at a second predefined interval.

2. The method, as claimed in claim 1, wherein said method of metering each packet further comprises of
Creating a counter, on said IPTV stream joining;
Configuring said counter with an expected number of bits in said first predefined interval; and
Deducting number of packets from said counter, on detecting said number of packets destined for said IPTV stream.

3. The method, as claimed in claim 2, wherein said method comprises of creating said counter after passing necessary checks.

4. The method, as claimed in claim 1, wherein said IPTV stream is not in good health if count of said impairment counter is greater than a predefined threshold.

5. The method, as claimed in claim 4, wherein an alert is raised on detecting that said IPTV stream is not in good health.

6. An Internet Protocol Television, IPTV, Network, wherein health of said IPTV network is monitored in a continuous manner, said IPTV network comprising at least one means configured for
Metering (401, 402) each packet destined for an IPTV stream using a counter;
Scanning (403, 404) said counter at a first predefined interval;
Incrementing (405, 406)
an impairment counter if said counter does not satisfy expected rate for said IPTV stream; and
Scanning (408)
said impairment counter for health of said IPTV stream at a second predefined interval.

7. The IPTV network, as claimed in claim 6, wherein said IPTV network is further configured for metering each packet by
Creating a counter, on said IPTV stream joining;
Configuring said counter with an expected number of bits in said first predefined interval; and
Deducting number of packets from said counter, on detecting said number of packets destined for said IPTV stream.

8. The IPTV network, as claimed in claim 7, wherein said IPTV network is further configured for creating said counter after passing necessary checks.

9. The IPTV network, as claimed in claim 6, wherein said IPTV network is further configured for raising an alert on detecting that said IPTV stream is not in good health.

10. A device in an Internet Protocol Television, IPTV, Network, wherein health of said
IPTV network is monitored in a continuous manner, said device comprising at least one means configured for
Metering (401, 402) each packet destined for an IPTV stream using a counter;
Scanning (403, 404) said counter at a first predefined interval;
Incrementing (405, 406)
an impairment counter if said counter does not satisfy expected rate for said IPTV stream; and
Scanning (408)
said impairment counter for health of said IPTV stream at a second predefined interval.

11. The device, as claimed in claim 10, wherein said device is further configured for metering each packet by
Creating a counter, on said IPTV stream joining;
Configuring said counter with an expected number of bits in said first predefined interval; and
Deducting number of packets from said counter, on detecting said number of packets destined for said IPTV stream.

12. The device, as claimed in claim 11, wherein said device is further configured for creating said counter after passing necessary checks.

13. The device, as claimed in claim 10, wherein said device is further configured for raising an alert on detecting that said IPTV stream is not in good health.

## Patentansprüche

1. Verfahren zum Überwachen des Zustands eines Internet-Protokoll-Fernsehen-Netzwerks, IPTV, auf kontinuierliche Art und Weise, wobei das besagte Verfahren Folgendes umfasst:
Messen (401, 402) eines jeden für den IPTV-Datenstrom vorgesehenen Pakets, mithilfe eines Zählers;
Scannen (403, 404) des besagten Zählers in einem ersten vorher festgelegten Intervall;
Erhöhen (405, 406) eines Wertminderungszählers, wenn der besagte Zähler die erwartete Rate für den besagten IPTV-Datenstrom nicht erfüllt; und
Scannen (408) des besagten Wertminderungszählers auf den Zustand des besagten IPTV-Datenstroms in einem zweiten vorher festgelegten Intervall.

2. Verfahren nach Anspruch 1, wobei das besagte Verfahren des Messens jedes Pakets weiterhin Folgendes umfasst:
Erstellen eines Zählers an der besagten IPTV-Datenstromverbindung;
Konfigurieren des besagten Zählers mit einer erwarteten Anzahl an Bits in besagtem ersten vorher festgelegten Intervall; und
Ableiten der Anzahl an Paketen von besagtem Zähler nach Ermittlung der besagten Anzahl an für den besagten IPTV-Datenstrom bestimmten Paketen.

3. Verfahren nach Anspruch 2, wobei das besagte Verfahren das Erstellen des besagten Zählers umfasst, nachdem die erforderlichen Prüfungen bestanden wurden.

4. Verfahren nach Anspruch 1, wobei der besagte IPTV-Datenstrom in keinem guten Zustand ist, wenn das Ergebnis des besagten Wertminderungszählers höher als der vorher festgelegte Schwellenwert ist.

5. Verfahren nach Anspruch 4, wobei ein Alarm ausgelöst wird, wenn sich herausstellt, dass der besagte IPTV-Datenstrom in keinem guten Zustand ist.

6. Internet-Protokoll-Fernsehen-Netzwerk, IPTV, wobei der Zustand des besagten IPTV-Netzwerks auf kontinuierliche Art und Weise überwacht wird, wobei das besagte IPTV-Netzwerk mindestens Mittel umfasst, das konfiguriert ist, zum
Messen (401, 402) eines jeden für den IPTV-Datenstrom vorgesehenen Pakets, mithilfe eines Zählers;
Scannen (403, 404) des besagten Zählers in einem ersten vorher festgelegten Intervall;
Erhöhen (405, 406) eines Wertminderungszählers, wenn der besagte Zähler die erwartete Rate für den besagten IPTV-Datenstrom nicht erfüllt; und
Scannen (408) des besagten Wertminderungszählers auf den Zustand des besagten IPTV-Datenstroms in einem zweiten vorher festgelegten Intervall.

7. IPTV-Netzwerk nach Anspruch 6, wobei das besagte IPTV-Netzwerk weiterhin zum Messen eines jeden Pakets konfiguriert wurde, durch
Erstellen eines Zählers an der besagten IPTV-Datenstromverbindung; Konfigurieren des besagten Zählers mit einer erwarteten Anzahl an Bits nach einem ersten vorher festgelegten Intervall; und
Ableiten der Anzahl an Paketen von besagtem Zähler nach Ermittlung der besagten Anzahl an für den besagten IPTV-Datenstrom bestimmten Paketen.

8. IPTV-Netzwerk nach Anspruch 7, wobei das besagte IPTV-Netzwerk weiterhin zum Erstellen des besagten Zählers konfiguriert wurde, nachdem die erforderlichen Prüfungen bestanden wurden.

9. IPTV-Netzwerk nach Anspruch 6, wobei das besagte IPTV-Netzwerk weiterhin zum Auslösen eines Alarms konfiguriert wurde, wenn festgestellt wird, dass der besagte IPTV-Datenstrom in keinem guten Zustand ist.

10. Vorrichtung in einem Internet-Protokoll-Fernsehens-Netzwerk, IPTV, wobei der Zustand des besagten IPTV-Netzwerks auf kontinuierliche Art und Weise überwacht wird, wobei die besagte Vorrichtung mindestens ein Mittel umfasst, das konfiguriert ist zum
Messen (401, 402) eines jeden für den IPTV-Datenstrom vorgesehenen Pakets mithilfe eines Zählers;
Scannen (403, 404) des besagten Zählers in einem ersten vorher festgelegten Intervall;
Erhöhen (405, 406) eines Wertminderungszählers, wenn der besagte Zähler die erwartete Rate für den besagten IPTV-Datenstrom nicht erfüllt; und
Scannen (408) des besagten Wertminderungszählers auf den Zustand des besagten IPTV-Datenstroms in einem zweiten vorher festgelegten Intervall.

11. Vorrichtung nach Anspruch 10, wobei das besagte Gerät weiterhin zum Messen eines jeden Pakets konfiguriert wurde, durch
Erstellen eines Zählers an der besagten IPTV-Datenstromverbindung; Konfigurieren des besagten Zählers mit einer erwarteten Anzahl an Bits im ersten vorher festgelegten Intervall; und
Ableiten der Anzahl an Paketen von besagtem Zählers nach Ermittlung der besagten Anzahl an für den besagten IPTV-Datenstrom bestimmten Paketen.

12. Vorrichtung nach Anspruch 11, wobei das besagte Gerät weiterhin zum Erstellen des besagten Zählers konfiguriert wurde, nachdem die erforderlichen Prüfungen bestanden wurden.

13. Vorrichtung nach Anspruch 10, wobei das besagte Gerät weiterhin zum Auslösen eines Alarms konfiguriert wurde, wenn festgestellt wird, dass der besagte IPTV-Datenstrom in keinem guten Zustand ist.

## Revendications

1. Procédé de surveillance de la santé d'un réseau de télévision sur protocole Internet, IPTV, de manière continue, ledit procédé comprenant les étapes suivantes
mesurer (401, 402) chaque paquet destiné à un flux IPTV en utilisant un compteur ;
balayer (403, 404) ledit compteur à un premier intervalle prédéfini ;
incrémenter (405, 406) un compteur de détérioration si ledit compteur ne satisfait pas un débit prévu pour ledit flux IPTV ; et
balayer (408) ledit compteur de détérioration pour déterminer la santé dudit flux IPTV à un deuxième intervalle prédéfini.

2. Procédé, selon la revendication 1, ledit procédé de mesure de chaque paquet comprenant en outre les étapes suivantes
créer un compteur, au moment de rejoindre ledit flux IPTV ;
configurer ledit compteur avec un nombre prévu de bits dans ledit premier intervalle prédéfini ; et
déduire un nombre de paquets à partir dudit compteur, lors de la détection dudit nombre de paquets destinés audit flux IPTV.

3. Procédé, selon la revendication 2, dans lequel ledit procédé comprend la création dudit compteur après avoir effectué les vérifications nécessaires.

4. Procédé, selon la revendication 1, dans lequel la santé dudit flux IPTV n'est pas bonne si le relevé dudit compteur de détérioration est supérieur à un seuil prédéfini.

5. Procédé, selon la revendication 4, dans lequel une alerte est déclenchée lorsqu'il est détecté que la santé dudit flux IPTV n'est pas bonne.

6. Réseau de télévision sur protocole Internet, IPTV, dans lequel la santé dudit réseau IPTV est surveillée de manière continue, ledit réseau IPTV comprenant au moins un moyen configuré pour
mesurer (401, 402) chaque paquet destiné à un flux IPTV en utilisant un compteur ;
balayer (403, 404) ledit compteur à un premier intervalle prédéfini ;
incrémenter (405, 406) un compteur de détérioration si ledit compteur ne satisfait pas un débit prévu pour ledit flux IPTV ; et
balayer (408) ledit compteur de détérioration pour déterminer la santé dudit flux IPTV à un deuxième intervalle prédéfini.

7. Réseau IPTV, selon la revendication 6, dans lequel ledit réseau IPTV est en outre configuré pour mesurer chaque paquet
en créant un compteur, au moment de rejoindre ledit flux IPTV ;
en configurant ledit compteur avec un nombre prévu de bits dans ledit premier intervalle prédéfini ; et
en déduisant un nombre de paquets à partir dudit compteur, lors de la détection dudit nombre de paquets destinés audit flux IPTV.

8. Réseau IPTV, selon la revendication 7, dans lequel ledit réseau IPTV est en outre configuré pour créer ledit compteur après avoir effectué les vérifications nécessaires.

9. Réseau IPTV, selon la revendication 6, dans lequel ledit réseau IPTV est en outre configuré pour déclencher une alerte lorsqu'il est détecté que la santé dudit flux IPTV n'est pas bonne.

10. Dispositif dans un réseau de télévision sur protocole Internet, IPTV, dans lequel la santé dudit réseau IPTV est surveillée de manière continue, ledit dispositif comprenant au moins un moyen configuré pour
mesurer (401, 402) chaque paquet destiné à un flux IPTV en utilisant un compteur ;
balayer (403, 404) ledit compteur à un premier intervalle prédéfini ;
incrémenter (405, 406) un compteur de détérioration si ledit compteur ne satisfait pas un débit prévu pour ledit flux IPTV ; et
balayer (408) ledit compteur de détérioration pour déterminer la santé dudit flux IPTV à un deuxième intervalle prédéfini.

11. Dispositif, selon la revendication 10, dans lequel ledit dispositif est en outre configuré pour mesurer chaque paquet
en créant un compteur, au moment de rejoindre ledit flux IPTV ;
en configurant ledit compteur avec un nombre prévu de bits dans ledit premier intervalle prédéfini ; et
en déduisant un nombre de paquets à partir dudit compteur, lors de la détection dudit nombre de paquets destinés audit flux IPTV.

12. Dispositif, selon la revendication 11, dans lequel ledit dispositif est en outre configuré pour créer ledit compteur après avoir effectué les vérifications nécessaires.

13. Dispositif, selon la revendication 10, dans lequel ledit dispositif est en outre configuré pour déclencher une alerte lorsqu'il est détecté que la santé dudit flux IPTV n'est pas bonne.
